(19) **Europäisches Patentamt**
**European Patent Office**
**Office européen des brevets**

(11) **EP 1 767 127 B1**

(12) **EUROPEAN PATENT SPECIFICATION**

(45) Date of publication and mention
of the grant of the patent:
**18.06.2008 Bulletin 2008/25**

(51) Int Cl.:
*A47J 27/21* *(2006.01)*

(21) Application number: **06254949.8**

(22) Date of filing: **25.09.2006**

(54) **Heaters for liquid heating vessels**

Heizelemente für Wassererhitzungsgeräte

Eléments chauffants pour bouilloires

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **26.09.2005 GB 0519594**

(43) Date of publication of application:
**28.03.2007 Bulletin 2007/13**

(73) Proprietor: **STRIX LIMITED
Ronaldsway,
Isle of Man IM9 2RG (GB)**

(72) Inventors:
• **Scott, Michael James
Onchan, Isle of Man IM3 2AU (GB)**

• **Fenna, Iain
Peel, Isle of Man IM5 1WA (GB)**

(74) Representative: **Samuels, Adrian James
Frank B. Dehn & Co.
St Bride's House
10 Salisbury Square
London EC4Y 8JD (GB)**

(56) References cited:
**WO-A-00/47095          WO-A2-01/56437
WO-A2-02/085169     GB-A- 1 264 464
GB-A- 2 393 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application relates to improvements in heaters for liquid heating vessels, particularly those with a keep-warm capability.

Liquid heating vessels, such as those adapted for heating water to boiling, predominantly employ a so-called under-floor heater. These comprise a sheathed heating element proper attached to or formed on the underside of a plate which forms the base or part of the base of the vessel. The sheathed element proper is made up of a resistance wire, e.g. Nichrome, a nickel/chromium alloy, which is placed inside a tubular sheath, typically of aluminium, the sheath then being packed with magnesium oxide powder which acts as an electrical insulator but a thermal conductor.

The power output for a sheathed element connected to a domestic mains electrical supply is of course dependent upon its resistance according to the formula:

$$P = \frac{V^2}{R}$$

where P= output power; V= mains voltage (RMS); R= resistance of heater.

Clearly for large output powers e.g. 2-3 kW as is typically used for boiling water, the necessary heater resistance will be relatively low: an output of 3 kW from a 240V supply requires a resistance of 19 ohms. This is easily achievable with standard gauge Nichrome wire in a conventional length element.

However, there is a growing demand for additional functionality on liquid heating vessels and a popular feature is the ability to maintain liquid in the vessel at a temperature around or below boiling. This requires much less power than is required to heat the liquid, e.g. water, from room temperature to boiling in a reasonable time. There is therefore a need to be able to provide a lower power element which can maintain liquid at a temperature around or below boiling. Such an element is known as a keep-warm element. In a typical application a keep-warm element may be required to have a power of only 60 Watts. Applying this to the equation above gives a resistance of 960 Ohms. However, sheathed elements with a resistance of this order are difficult (and therefore expensive) to manufacture since the resistance wire used must be very thin. This also makes the element fragile. Another disadvantage is that the element must be at least as long or longer than a standard full power element in order to accommodate sufficient length of wire to give the required resistance even with the thinnest practical wire. This adds cost and limits design freedom for the appliance as a whole.

GB-A-2 393 372 discloses a heater according to the preamble of claim 1 in which the main and keep-warm elements are both sheathed elements.

A common compromise is to use a thermostat arrangement to cycle the main heater, or a higher power secondary heater, to give the required lower average power. However, this is not ideal as it requires additional components and the continual switching of the heater is a potential source of electromagnetic interference.

It is an object of the invention to provide an improved heater. When viewed from a first aspect the invention provides a heater for closing an opening in the base of a liquid heating vessel, the heater comprising a base plate, and in good thermal contact with said base plate a main element for heating liquid in the vessel to a predetermined temperature and a secondary heater of lower power than the main element, characterised in that said secondary heater comprising a resistor in the form of an elongate resistance around an insulating core.

Thus it will be seen that in accordance with the invention a heater uses a resistance provided around a core as a low power keep-warm element. The elongate resistance could be some sort of film resistance such as a foil or thick film resistance, but preferably the resistor comprises a wire-wound resistor. Such resistors typically comprise a resistance wire wound around an insulating (e.g. ceramic) core and usually covered with an insulating sleeve, although this is not essential. They are widely available and normally used as discrete components in electronic circuits where a slightly higher than usual power dissipation is required e.g. for use in an amplifier. They are typically rated at a few Watts in free air.

However, the Applicant has appreciated that when used in the context of the present invention, i.e. in close thermal contact with a heater base which is itself in close thermal contact in use with a liquid such as water, the water acts as a very efficient heat sink, so allowing the resistor to operate continuously at a much higher power - e.g. 60 Watts or so which is the sort of power required to keep water in a typical water boiling vessel warm but not boiling.

The advantages of using a keep-warm heater in accordance with the invention as the secondary heater are that it is much lower cost than an equivalently powered traditional sheathed heater (being mass produced and inherently easier to make) and significantly smaller, maximising design freedom and allowing the heater as a whole to be compact which leads to further cost savings.

The resistor could be in thermal contact with the heater base on one side only. However, such an arrangement might not permit sufficient heat transfer into the liquid to prevent overheating. It is preferred therefore at least partially, and preferably fully, to encapsulate the resistor in a thermally conductive material. This improves heat transfer to the liquid. The material could be metal - for example the resistor might be in a bore in a block fixed to the heater base. Alternatively, the encapsulation might be carried out by a clamp holding the resistor against the base.

Preferably, however, the resistor is received in an enclosure mounted to the base and filled with a suitably thermally conductive filler material. The material should have a sufficiently high thermal conductivity to prevent the resistance overheating. Preferably the thermal conductivity of the material is greater than 5 Watts per metre per Kelvin (W/m/K), more preferably greater than 10 W/m/K, more preferably greater than 15 W/m/K.

However the thermal conductivity is not the only consideration. The Applicant has found that preferably the thermal expansion of the filling should be as close as possible to the thermal expansion of the enclosure. This helps to ensure that no or very little air gap is created as the heater heats up during operation which would adversely affect the conduction of heat away from the resistance. For example where the enclosure is made from aluminium, as is preferred, it will have a coefficient of thermal expansion of approximately 23 parts per million per o̱C (ppm/°C). In these circumstances the filler preferably has a coefficient of greater than 8 ppm/°C, more preferably greater than 12 ppm/°C. Preferably the filler comprises magnesium oxide e.g. as a powder, putty or slurry. One example of a suitable filler material is Ceramic 10 MgO compound available from Sauereisen of Pittsburg, MA, USA. This has a thermal conductivity of 17-28 W/m/K and an expansion coefficient of 9 ppm/°C. Ceramic 33S, also available from Sauereisen is suitable as well. It has a thermal conductivity of 8-10 W/m/K and an expansion coefficient of 14 ppm/o̱C. Ideal would be a compound having a thermal conductivity similar to that of Ceramic 10 and an expansion coefficient similar to that of Ceramic 33S.

The attributes of the resistor may be selected according to the particular application but in preferred embodiments the resistor has a design power rating in free air of less than 10 Watts, preferably between 5 and 10 Watts and preferably approximately 7 Watts. Similarly the resistance of the resistor is preferably greater than 750 Ohms, preferably between 750 Ohms and 1.25 kilohms, preferably approximately 1 kilohm.

A preferred embodiment of the present invention will now be described, by way of example only, with reference to the accompanying drawings in which:

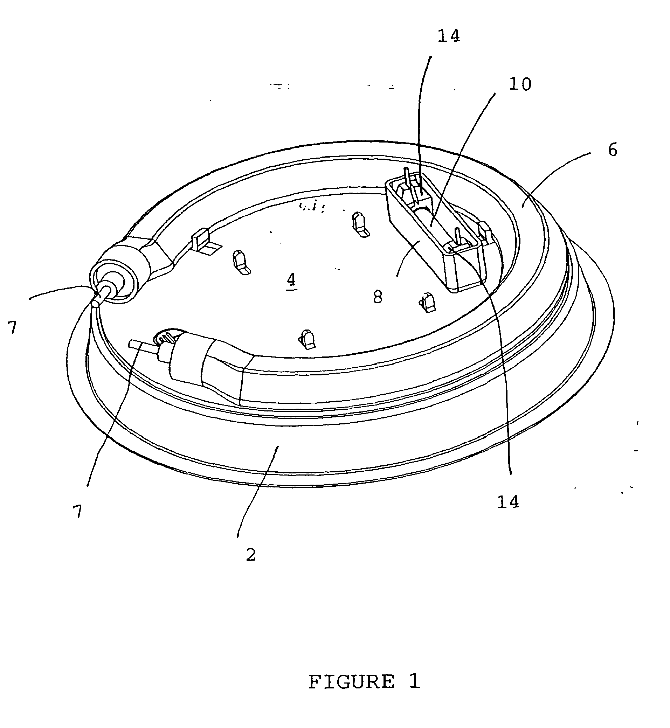

Fig. 1 is a perspective view from beneath of a heater in accordance with the invention.

The heater shown in Fig. 1 comprises a dished stainless steel base plate 2 with a generally planar central region. An aluminium heat diffuser plate 4 is provided on the planar central region. Around the periphery of the base is brazed a sheathed heating element 6 rated for example at 2200 W.

The sheathed element 6 extends over approximately 300 degrees and is terminated in a pair of electrical connections or 'cold tails' 7. Radially inwardly of the element 6, opposite the cold tails 7, is a narrow rectangular enclosure or trough 8, which is also of aluminium, brazed to the heat diffuser plate 4. Disposed in the trough 8 is a standard, off-the-shelf 1 kilohm wire-wound resistor 10 which has a free-air rating of 7 Watts. The leads of the resistor 12 are bent at right angles so as to extend vertically up. A pair of ceramic caps 14 is provided at either end of the resistor 10 to retain it firmly in the trough 8 and to insulate the leads 12 from the walls of the trough. Although not shown in the Figure, thereafter the trough 8 is filled with Ceramic 10 magnesium oxide compound available from Sauereisen, Pittsburg, MA, USA. which is compacted into the trough.

A control unit (not shown) is then fitted to the diffuser plate 4 with electrical connections made to the cold tails 7 of the main element and the leads 12 of the resistor. The whole heater assembly is then placed into the base of a liquid heating vessel using any convenient fixing method.

In use the main heating element 6 is energised by a control unit in order to heat water in the vessel rapidly to boiling or a lower temperature. The secondary heater formed by the wire-wound resistor 10 may or may not be energised during this initial heating phase. Once the desired temperature is reached the main element 6 is switched off and the secondary heater 10 is either switched on or kept on. By applying a mains voltage (240 volts RMS) across the 1 kilohm resistor it will dissipate a power of approximately 60 Watts. This is sufficient to maintain the temperature of the water at slightly below boiling - e.g. about 85 degrees. Of course the power to the resistor 10 need not be applied continuously - e.g. the power may be cycled if a lower average power is required.

Although in free air dissipating 60 W would cause the resistor 10 rapidly to overheat and fail, since it is mounted in the aluminium trough 8 packed with magnesium oxide compound, it is in good thermal contact with the base 2 and therefore the water in the vessel which acts as a very efficient heat sink and thus the running temperature of the resistor is maintained well within its normal operating range. Even if the water in the vessel boils dry the thermal mass of the base 2 is sufficient to prevent the resistor overheating - at least until an overheat protection mechanism such as a bimetallic actuator operated. Moreover since the thermal expansion of the filler is of the same order of magnitude as the aluminium trough 8, no significant gap will be opened between the filler and the wall of the trough in the temperature range encountered.

**Claims**

1. A heater for closing an opening in the base of a liquid heating vessel, the heater comprising: a base plate (2); and, in good thermal contact with said base plate, a main element (6) for heating liquid in the vessel to a predetermined temperature and a secondary heater of lower power than the main element, **characterised in that** said secondary heater comprises resistor (10) in the form of an elongate resistance around an insulating core.

2. A heater as claimed in claim 1 wherein the resistor comprises a wire-wound resistor (10).

3. A heater as claimed in claim 1 or 2 wherein said resistor (10) is at least partially encapsulated in a thermally conductive material.

4. A heater as claimed in claim 1 or 2 wherein said resistor (10) is fully encapsulated in a thermally conductive material.

5. A heater as claimed in any preceding claim wherein the resistor (10) is received in an enclosure (8) mounted to the base plate (2) and filled with a thermally conductive filler material

6. A heater as claimed in claim 5 wherein the thermal conductivity of the filler material is greater than 5 Watts per metre per Kelvin (W/m/K), preferably greater than 10 W/m/R, and more preferably greater than 15 W/m/K.

7. A heater as claimed in claim 5 or 6 wherein the enclosure (8) is made from aluminium.

8. A heater as claimed in claim 5, 6 or 7 wherein the enclosure (8) has a coefficient of thermal expansion of approximately 23 ppm/°C.

9. A heater as claimed in claim 7 or 8 wherein the filler material has a coefficient of thermal expansion greater than 8 ppm/°C, preferably greater than 12 ppm/°C.

10. A heater as claimed in any of claims 5-9 wherein the filler material comprises magnesium oxide.

11. A heater as claimed in any of claims 5-10 wherein the filler material has a thermal conductivity of 17-28 W/m/K .

12. A heater as claimed in any of claims 5-11 wherein the filler material has a thermal expansion coefficient of 14 ppm/°C.

13. A heater as claimed in any preceding claim wherein the resistor (10) has a design power rating in free air of less than 10 Watts, preferably between 5 and 10 Watts and preferably approximately 7 Watts.

14. A heater as in any claim wherein the resistance of the resistor (10) is preferably greater than 750 Ohms, preferably between 750 Ohms and 1.25 kilohms, preferably approximately 1 kilohm.

**Patentansprüche**

1. Heizvorrichtung zum Schließen einer Öffnung im Boden eines Flüssigkeitheizgefäßes, wobei die Heizvorrichtung umfasst: eine Bodenplatte (2); und, in gutem thermischen Kontakt mit der Bodenplatte (2), ein Hauptelement (6) zum Heizen von Flüssigkeit in dem Gefäß auf eine vorbestimmte Temperatur und eine sekundäre Heizvorrichtung von geringerer Leistung als das Hauptelement, **dadurch gekennzeichnet, dass** die sekundäre Heizvorrichtung einen Widerstand (10) in der Form eines länglichen elektrischen Widerstandes um einen Isolationskern umfasst.

2. Heizvorrichtung nach Anspruch 1, wobei der Widerstand einen drahtgewickelten Widerstand (10) umfasst.

3. Heizvorrichtung nach Anspruch 1 oder 2, wobei der Widerstand (10) zumindest teilweise in einem thermisch leitfähigen Material gekapselt.ist.

4. Heizvorrichtung nach Anspruch 1 oder 2, wobei der Widerstand (10) vollständig in einem thermisch leitfähigen Material gekapselt ist.

5. Heizvorrichtung nach einem der vorhergehenden Ansprüche, wobei der Widerstand (10) in einer Verkleidung (8) aufgenommen ist, welche an der Bodenplatte (2) angebracht und mit einem thermisch leitenden Füllmaterial gefüllt ist.

6. Heizvorrichtung nach Anspruch 5, wobei die thermische Leitfähigkeit des Füllmaterials größer als 5 Watt pro Meter pro Kelvin (W/m/K), vorzugsweise größer als 10 W/m/K und weiter bevorzugt größer als 15 W/m/K ist.

7. Heizvorrichtung nach Anspruch 5 oder 6, wobei die Verkleidung (8) aus Aluminium hergestellt ist.

8. Heizvorrichtung nach Anspruch 5, 6 oder 7, wobei die Verkleidung (8) einen thermischen Ausdehnungskoeffizienten von ungefähr 23 ppm/°C aufweist.

9. Heizvorrichtung nach Anspruch 7 oder 8, wobei das Füllmaterial einen thermischen Ausdehnungskoeffizienten größer als 8 ppm/°C, vorzugsweise größer als 12 ppm/°C aufweist.

10. Heizvorrichtung nach einem der Ansprüche 5 bis 9, wobei das Füllmaterial Magnesiumoxid umfasst.

11. Heizvorrichtung nach einem der Ansprüche 5 bis 10, wobei das Füllmaterial eine thermische Leitfähigkeit von 17-28 W/m/K aufweist.

**12.** Heizvorrichtung nach einem der Ansprüche 5 bis 11, wobei das Füllmaterial einen thermischen Ausdehnungskoeffizienten von 14 ppm/°C aufweist.

**13.** Heizvorrichtung nach einem der vorhergehenden Ansprüche, wobei der Widerstand (10) eine bauartspezifische Nennleistung in freier Luft von weniger als 10 Watt, vorzugsweise zwischen 5 und 10 Watt und vorzugsweise ungefähr 7 Watt aufweist.

**14.** Heizvorrichtung nach einem der vorhergehenden Ansprüche, wobei der elektrische Widerstand des Widerstandes (10) vorzugsweise größer als 750 Ohm, vorzugsweise zwischen 750 Ohm und 1,25 Kiloohm, vorzugsweise ungefähr 1 Kiloohm ist.

## Revendications

**1.** Elément chauffant pour la fermeture d'une ouverture dans la base d'un récipient de chauffage de liquide, l'élément chauffant comprenant : une plaque de base (2), et, en excellent contact thermique avec ladite plaque de base, un élément principal (6) pour le chauffage du liquide dans le récipient à une température prédéterminée et un deuxième élément chauffant de puissance inférieure à l'élément principal, **caractérisé en ce que** ledit deuxième élément chauffant comprend une résistance (10) de la forme d'une résistance allongée enroulée autour d'un noyau isolant.

**2.** Elément chauffant selon la revendication 1, dans lequel la résistance comprend une résistance bobinée (10).

**3.** Elément chauffant selon la revendication 1 ou 2, dans lequel ladite résistance (10) est au moins partiellement encapsulée dans un matériau thermiquement conducteur.

**4.** Elément chauffant selon la revendication 1 ou 2, dans lequel ladite résistance (10) est entièrement encapsulée dans un matériau thermiquement conducteur.

**5.** Elément chauffant selon l'une quelconque des revendications précédentes, dans lequel la résistance (10) est logée dans un boîtier (8) monté sur la plaque de base (2) et rempli d'un matériau de remplissage thermiquement conducteur.

**6.** Elément chauffant selon la revendication 5, dans lequel la conductivité thermique du matériau de remplissage est supérieure à 5 Watts par mètre par Kelvin (W/m/K), de préférence supérieure à 10 W/m/K, et de préférence supérieure à 15 W/m/K.

**7.** Elément chauffant selon la revendication 5 ou 6, dans lequel le boîtier (8) est réalisé en aluminium.

**8.** Elément chauffant selon la revendication 5, 6 ou 7, dans lequel le boîtier (8) a un coefficient de dilatation thermique d'environ 23 ppm/°C.

**9.** Elément chauffant selon la revendication 7 ou 8, dans lequel le matériau de remplissage a un coefficient de dilatation thermique supérieure à 8 ppm/°C, de préférence supérieur à 12 ppm/°C.

**10.** Elément chauffant selon l'une quelconque des revendications 5 à 9, dans lequel le matériau de remplissage comprend de l'oxyde de magnésium.

**11.** Elément chauffant selon l'une quelconque des revendications 5 à 9, dans lequel le matériau de remplissage a une conductivité thermique de 17 à 28 W/m/K.

**12.** Elément chauffant selon l'une quelconque des revendications 5 à 11, dans lequel le matériau de remplissage a un coefficient de dilatation thermique de 14 ppm/°C.

**13.** Elément chauffant selon l'une quelconque des revendications précédentes, dans lequel la résistance (10) a une puissance nominale à l'air libre de moins de 10 Watts, de préférence entre 5 et 10 Watts et de préférence d'environ 7 Watts.

**14.** Elément chauffant selon l'une quelconque des revendications précédentes, dans lequel la valeur de la résistance (10) est de préférence supérieure à 750 ohms, de préférence entre 750 ohms et 1,25 kilohms, de préférence environ 1 kilohm.

FIGURE 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2393372 A